# EUROPÄISCHE PATENTSCHRIFT

(11) **EP 2 700 298 B1**
(45) Veröffentlichungstag und Bekanntmachung des Hinweises auf die Patenterteilung: **21.06.2017**
(21) Anmeldenummer: 13175226.3
(22) Anmeldetag: 05.07.2013
(51) Int. Cl.: A01G 3/053, A01G 3/06

(54) **Einsatz für Gartenwerkzeug**
Garden tool insert device
Dispositif d'insertion pour outil de jardinage

(30) Priorität: 20.08.2012 DE 102012214710
(43) Veröffentlichungstag der Anmeldung: 26.02.2014
(73) Patentinhaber: ROBERT BOSCH GMBH, 70442 Stuttgart (DE)
(72) Erfinder: Bako, Gyula, 3526 Miskolc (HU); Zador, Endre, IP1 3LJ Ipswich, Suffolk (County) (HU); Balla, Gabor, 3529 Miskolc (HU)

(56) Entgegenhaltungen:
- EP-A1- 2 281 440
- EP-A1- 2 286 659
- EP-B1- 1 762 136
- DE-A1-102008 047 999
- DE-A1-102009 014 096
- DE-U1-202010 005 370
- US-A- 3 959 878

## Beschreibung

### Stand der Technik

Aus EP 1 762 136 B1 ist bereits eine Garteneinsatzwerkzeugvorrichtung für eine tragbare Werkzeugmaschine bekannt, die zumindest eine Einsatzwerkzeugeinheit und zumindest ein Gehäuse aufweist, in dem zumindest ein beweglich gelagertes Schneidelement der Einsatzwerkzeugeinheit antriebseinheitsfrei angeordnet ist.

Zudem sind aus DE 20 2010 005370 U1 und aus DE 10 2009 014096 A1 ebenfalls bereits Garteneinsatzwerkzeugvorrichtungen für tragbare Werkzeugmaschinen bekannt, die zumindest eine Einsatzwerkzeugeinheit und zumindest ein Gehäuse aufweisen, in dem zumindest ein beweglich gelagertes Schneidelement der Einsatzwerkzeugeinheit antriebseinheitsfrei angeordnet ist, umfassen.

### Offenbarung der Erfindung

Die Erfindung geht aus von einer Garteneinsatzwerkzeugvorrichtung für eine tragbare Werkzeugmaschine, mit zumindest einer Einsatzwerkzeugeinheit und mit zumindest einem Gehäuse, in dem zumindest ein beweglich gelagertes Schneidelement der Einsatzwerkzeugeinheit antriebseinheitsfrei angeordnet ist.

Es wird vorgeschlagen, dass das Gehäuse zumindest zwei miteinander verbundene Gehäuseschalenelemente umfasst. Der Begriff "Garteneinsatzwerkzeugvorrichtung" soll hier insbesondere eine Vorrichtung definieren, die zu einer Bearbeitung von Pflanzen o.dgl. in einem Garten und/oder in einem Park genutzt wird und die zu einer Bearbeitung von Pflanzen mit einer tragbaren Werkzeugmaschine verbunden ist, wie beispielsweise eine Heckenscherenvorrichtung, eine Grasschneidevorrichtung, eine Astschneidevorrichtung usw. Insbesondere werden/wird eine Antriebskraft und/oder ein Antriebsmoment in einem mit der tragbaren Werkzeugmaschine verbundenen Zustand der Garteneinsatzwerkzeugvorrichtung auf die Einsatzwerkzeugeinheit übertragen. Unter einer "Einsatzwerkzeugeinheit" soll hier insbesondere eine Einheit, vorzugsweise ein Einsatzwerkzeug, verstanden werden, die zu einer Bearbeitung von Pflanzen o.dgl. antriebstechnisch mit einer Antriebseinheit und/oder mit einer Abtriebseinheit der tragbaren Werkzeugmaschine verbunden ist, wie beispielsweise eine Heckenscherenklingeneinheit, eine Grasscherenklingeneinheit, eine Rasentrimmerschnureinheit, eine Rasentrimmermessereinheit usw. Bevorzugt ist die Einsatzwerkzeugeinheit als Heckenscherenschneideinheit oder als Grasscherenschneideinheit ausgebildet. Es ist jedoch auch denkbar, dass die Einsatzwerkzeugeinheit eine andere, einem Fachmann als sinnvoll erscheinende Ausgestaltung aufweist.

Der Begriff "Gehäuse" soll hier insbesondere eine Einheit definieren, die zumindest in einem montierten Zustand dazu vorgesehen ist, Lagerkräfte von zumindest einem beweglich in der Einheit angeordneten Element abzustützen. Besonders bevorzugt umgibt das Gehäuse die Einsatzwerkzeugeinheit zumindest in einem Teilbereich vollständig entlang zumindest einer Umfangsrichtung. Unter "vorgesehen" soll insbesondere speziell ausgelegt und/oder speziell ausgestattet verstanden werden. Die Umfangsrichtung verläuft besonders bevorzugt in einer sich zumindest im Wesentlichen senkrecht zu einer Bewegungsebene des Schneidelements der Einsatzwerkzeugeinheit erstreckenden Ebene. Der Ausdruck "Bewegungsebene des Schneidelements der Einsatzwerkzeugeinheit" soll hier insbesondere eine Ebene definieren, in der das Schneidelement sich zu einer Bearbeitung von Pflanzen und/oder Werkstücken bewegt bzw. infolge einer Antriebskraft und/oder infolge eines Antriebsmoments bewegt wird. Unter "im Wesentlichen senkrecht" soll hier insbesondere eine Ausrichtung einer Richtung relativ zu einer Bezugsrichtung verstanden werden, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Unter einem "Schneidelement" soll hier insbesondere ein Element verstanden werden, an dem zumindest eine Schneidkante zu einer Bearbeitung von Pflanzen und/oder Werkstücken angeordnet ist. Insbesondere wirkt das Schneidelement mit einem Gegenschneidelement der Einsatzwerkzeugeinheit zusammen. Somit wird bevorzugt ein Abscheren von Pflanzen und/oder Werkstücken bei einer Bearbeitung mittels der Einsatzwerkzeugeinheit erreicht. Besonders bevorzugt ist das Gegenschneidelement ortsfest im Gehäuse angeordnet. Somit wird insbesondere das Schneidelement relativ zum Gegenschneidelement infolge einer Antriebskraft und/oder eines Antriebsmoments bewegt. Der Begriff "antriebseinheitsfrei" soll hier insbesondere eine von einer Antriebseinheit entkoppelte Ausgestaltung der Garteneinsatzwerkzeugvorrichtung, insbesondere des Gehäuses, definieren. Somit umfasst die Garteneinsatzwerkzeugvorrichtung besonders bevorzugt keine Antriebseinheit, insbesondere keine elektrische Antriebseinheit wie beispielsweise eine Elektromotoreinheit, zu einem Antrieb der Einsatzwerkzeugeinheit. Daher ist vorzugsweise im Gehäuse keine Antriebseinheit angeordnet, die Antriebskräfte und/oder Antriebsmomente zu einer Bewegung des Schneidelements erzeugt. Mittels der erfindungsgemäßen Ausgestaltung der Garteneinsatzwerkzeugvorrichtung kann vorteilhaft ein komfortables Abnehmen der Garteneinsatzwerkzeugvorrichtung von einer tragbaren Werkzeugmaschine erreicht werden. Ein Bediener muss nicht mehr die Einsatzwerkzeugeinheit direkt greifen, um einen Einsatzwerkzeugwechsel an der tragbaren Werkzeugmaschine zu erreichen, sondern der Bediener kann komfortabel das Gehäuse greifen. Hierdurch kann eine Verletzungsgefahr für einen Bediener bei einem Austausch bzw. bei einer Anordnung der Garteneinsatzwerkzeugvorrichtung an der tragbaren Werkzeugmaschine, insbesondere an einer Werkzeugaufnahme der tragbaren Werkzeugmaschine, vorteilhaft gering gehalten werden. Die Gehäuseschalenelemente sind bevorzugt lösbar mittels Befestigungselementen miteinander verbunden bzw. aneinander befestigt. Vorzugsweise sind die Befestigungselemente als Schrauben ausgebildet. Andere, einem Fachmann als sinnvoll erscheinende Befestigungselemente sind ebenfalls denkbar, wie beispielsweise Rasthaken, Schnappverschlusselemente, Bajonettverschlusselemente usw. Es kann vorteilhaft ein für Wartungen und/oder Reparaturen für einen Bediener komfortabel zugängliches Gehäuse erreicht werden.

Des Weiteren wird vorgeschlagen, dass die Garteneinsatzwerkzeugvorrichtung zumindest eine Antriebsverbindungseinheit aufweist, die zumindest ein Antriebsverbindungselement umfasst, das drehbar im Gehäuse gelagert ist. Unter einer "Antriebsverbindungseinheit" soll hier insbesondere eine Einheit verstanden werden, die nach einer formschlüssigen und/oder kraftschlüssigen Verbindung von zumindest zwei Elementen miteinander zu einer Übertragung von Antriebskräften und/oder von Antriebsmomenten vorgesehen ist. Das Antriebsverbindungselement wird bevorzugt zu einem Antrieb der Einsatzwerkzeugeinheit in einem an der tragbaren Werkzeugmaschine angeordneten Zustand des Gehäuses formschlüssig und/oder kraftschlüssig mit zumindest einem Abtriebselement einer Abtriebseinheit der tragbaren Werkzeugmaschine verbunden. Mittels der erfindungsgemäßen Ausgestaltung können konstruktiv einfach Antriebskräfte und/oder Antriebsmomente einer Antriebseinheit der tragbaren Werkzeugmaschine in einem an der tragbaren Werkzeugmaschine angeordneten Zustand des Gehäuses zu einem Antrieb der Einsatzwerkzeugeinheit genutzt werden.

Ferner wird vorgeschlagen, dass die Garteneinsatzwerkzeugvorrichtung zumindest die Antriebsverbindungseinheit aufweist, die zumindest das Antriebsverbindungselement umfasst, das zumindest mit dem Schneidelement der Einsatzwerkzeugeinheit verbunden ist. Hierbei kann das Antriebsverbindungselement direkt und/oder indirekt, insbesondere durch eine Zwischenschaltung eines Kulissenelements, mit dem Schneidelement der Einsatzwerkzeugeinheit verbunden sein. Es kann vorteilhaft mit wenigen Bauteilen eine Übertragung von Antriebskräften und/oder von Antriebsmomenten der Antriebseinheit der tragbaren Werkzeugmaschine in einem an der tragbaren Werkzeugmaschine angeordneten Zustand des Gehäuses zu einem Antrieb der Einsatzwerkzeugeinheit erreicht werden.

Zudem wird vorgeschlagen, dass die Garteneinsatzwerkzeugvorrichtung zumindest die Antriebsverbindungseinheit aufweist, die zumindest das Antriebsverbindungselement umfasst, das zumindest das Schneidelement der Einsatzwerkzeugeinheit in zumindest einem Zustand oszillierend antreibt. Hierbei treibt das Antriebsverbindungselement das Schneidelement der Einsatzwerkzeugeinheit mittels einer Übertragung von Antriebskräften und/oder von Antriebsmomenten der Antriebseinheit der tragbaren Werkzeugmaschine in einem an der tragbaren Werkzeugmaschine angeordneten Zustand des Gehäuses an. Die Einsatzwerkzeugeinheit umfasst vorzugsweise zumindest ein Kulissenelement, das am Schneidelement angeordnet ist und in das das Antriebsverbindungselement eingreift. Es kann vorteilhaft ein Scherenschnitt mittels der Einsatzwerkzeugeinheit erzeugt werden.

Vorteilhafterweise ist das Antriebsverbindungselement als Formschlusskupplungselement ausgebildet. Es ist jedoch auch denkbar, dass das Antriebsverbindungselement eine andere, einem Fachmann als sinnvoll erscheinende Ausgestaltung umfasst, wie beispielsweise eine Ausgestaltung als Kraftschlusskupplungselement. Besonders bevorzugt umfasst das Antriebsverbindungselement zumindest einen Fortsatz und/oder zumindest eine Ausnehmung. Mittels der erfindungsgemäßen Ausgestaltung kann vorteilhaft eine sichere Übertragung von Antriebskräften und/oder von Antriebsmomenten erreicht werden.

Des Weiteren wird vorgeschlagen, dass am Antriebsverbindungselement ein Exzenterelement der Antriebsverbindungseinheit angeordnet ist. Besonders bevorzugt greift das Exzenterelement in das Kulissenelement der Einsatzwerkzeugeinheit ein. Das Exzenterelement ist bevorzugt einstückig an das Antriebsverbindungselement angeformt. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es kann konstruktiv einfach eine oszillierende Bewegung des Schneidelements in einem mittels der tragbaren Werkzeugmaschine angetriebenen Zustand der Einsatzwerkzeugeinheit erreicht werden.

Ferner wird vorgeschlagen, dass die Garteneinsatzwerkzeugvorrichtung zumindest eine Kopplungseinheit umfasst, die zumindest ein am Gehäuse angeordnetes Kopplungselement zu einer Fixierung des Gehäuses an einer Werkzeugaufnahme der tragbaren Werkzeugmaschine aufweist. Der Ausdruck "Kopplungseinheit" soll hier insbesondere eine Einheit definieren, mittels deren das Gehäuse der Garteneinsatzwerkzeugvorrichtung formschlüssig und/oder kraftschlüssig an einer Werkzeugaufnahme der tragbaren Werkzeugmaschine befestigbar ist. Das Kopplungselement ist bevorzugt als Rastausnehmung ausgebildet, in die zumindest ein als Rasthaken ausgebildetes Gegenrastelement einer Fixiereinheit der tragbaren Werkzeugmaschine in zumindest einem Zustand eingreift. Es ist jedoch auch denkbar, dass das Kopplungselement eine andere, einem Fachmann als sinnvoll erscheinende Ausgestaltung aufweist, wie beispielsweise eine Ausgestaltung als Rasthaken. Es kann vorteilhaft eine sichere Befestigung der Garteneinsatzwerkzeugvorrichtung an der tragbaren Werkzeugmaschine, insbesondere an der Werkzeugaufnahme der tragbaren Werkzeugmaschine, realisiert werden.

Des Weiteren geht die Erfindung aus von einem Gartenwerkzeugmaschinensystem mit zumindest einer tragbaren Werkzeugmaschine und mit zumindest einer erfindungsgemäßen Garteneinsatzwerkzeugvorrichtung. Unter einer "tragbaren Werkzeugmaschine" soll hier insbesondere eine Werkzeugmaschine zu einer Bearbeitung von Werkstücken und/oder Pflanzen, insbesondere Gartenpflanzen, verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Besonders bevorzugt ist die tragbare Werkzeugmaschine als elektrisch betreibbares Gartengerät ausgebildet, das zu einer Bearbeitung von Hecken und/oder Grashalmen vorgesehen ist. Somit ist die tragbare Werkzeugmaschine bevorzugt als elektrische Grasschere und/oder als elektrische Heckenschere ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Multifunktionswerkzeugmaschine, als Bohrmaschine usw. Mittels der erfindungsgemäßen Ausgestaltung kann vorteilhaft ein hoher Bedienkomfort erreicht werden. Zudem kann ein großes Einsatzgebiet für die tragbare Werkzeugmaschine erreicht werden.

Ferner wird vorgeschlagen, dass die tragbare Werkzeugmaschine zumindest die Abtriebseinheit umfasst, die zumindest das Abtriebselement aufweist, das in zumindest einem Zustand mit dem Antriebsverbindungselement der Antriebsverbindungseinheit der Garteneinsatzwerkzeugvorrichtung zusammenwirkt. Das Antriebsverbindungselement weist bevorzugt zumindest einen Fortsatz und/oder eine Ausnehmung auf, der und/oder die mit dem mit dem Antriebsverbindungselement korrespondierend ausgebildeten Abtriebselement der Abtriebseinheit der tragbaren Werkzeugmaschine formschlüssig verbindbar sind/ist. Somit umfasst das Abtriebselement bevorzugt korrespondierend mit dem Fortsatz und/oder korrespondierend mit der Ausnehmung des Antriebsverbindungselements ausgebildete Ausnehmungen und/oder Fortsätze. Es kann vorteilhaft in einem an der tragbaren Werkzeugmaschine angeordneten Zustand des Gehäuses eine sichere Übertragung von Antriebskräften und/oder von Antriebsmomenten erreicht werden.

Die erfindungsgemäße Garteneinsatzwerkzeugvorrichtung und/oder das erfindungsgemäße Gartenwerkzeugmaschinensystem sollen/soll hierbei nicht auf die oben beschriebene Anwendung und Ausführungsform beschränkt sein. Insbesondere können/kann die erfindungsgemäße Garteneinsatzwerkzeugvorrichtung und/oder das erfindungsgemäße Gartenwerkzeugmaschinensystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Gartenwerkzeugmaschinensystem mit einer erfindungsgemäßen tragbaren Werkzeugmaschine und mit einer erfindungsgemäßen Garteneinsatzwerkzeugvorrichtung in einer schematischen Darstellung,
- Fig. 2: eine Schnittansicht der erfindungsgemäßen tragbaren Werkzeugmaschine und der erfindungsgemäßen Garteneinsatzwerkzeugvorrichtung in einer schematischen Darstellung,
- Fig. 3: eine Detailansicht einer Werkzeugaufnahme in einer schematischen Darstellung,
- Fig. 4: eine Detailansicht der erfindungsgemäßen Garteneinsatzwerkzeugvorrichtung in einer schematischen Darstellung,
- Fig. 5: eine Detailansicht eines Antriebsverbindungselements einer Antriebsverbindungseinheit der erfindungsgemäßen Garteneinsatzwerkzeugvorrichtung in einer schematischen Darstellung,
- Fig. 6: eine Detailansicht eines Abtriebselements einer Abtriebseinheit der erfindungsgemäßen tragbaren Werkzeugmaschine in einer schematischen Darstellung,
- Fig. 7: eine Explosionsansicht der erfindungsgemäßen Garteneinsatzwerkzeugvorrichtung in einer schematischen Darstellung und
- Fig. 8: eine Explosionsansicht einer alternativen, erfindungsgemäßen Garteneinsatzwerkzeugvorrichtung in einer schematischen Darstellung.

### Beschreibung der Ausführungsbeispiele

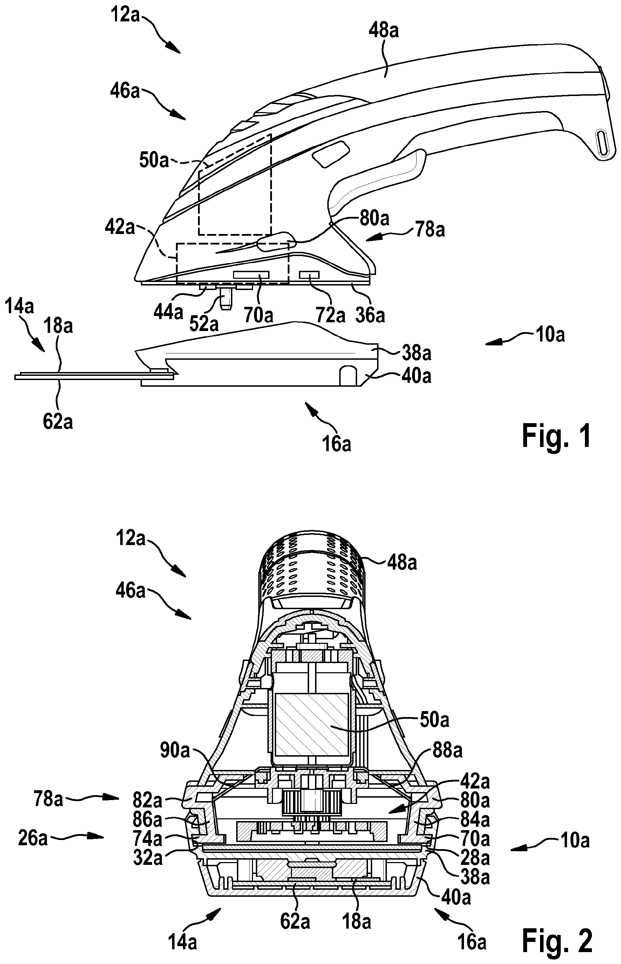

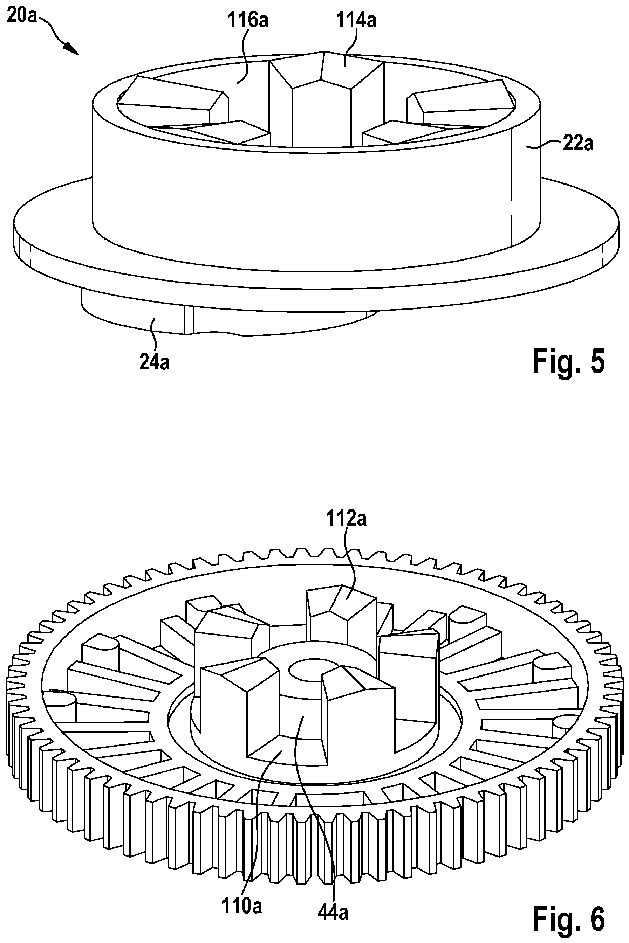

Figur 1 zeigt ein Gartenwerkzeugmaschinensystem 46a mit zumindest einer tragbaren Werkzeugmaschine 12a und mit zumindest einer Garteneinsatzwerkzeugvorrichtung 10a. Die tragbare Werkzeugmaschine 12a ist als elektrisch betreibbares Gartengerät ausgebildet. Hierbei weist die tragbare Werkzeugmaschine 12a ein Werkzeugmaschinengehäuse 48a auf. Das Werkzeugmaschinengehäuse 48a umschließt eine Antriebseinheit 50a und eine Abtriebseinheit 42a der tragbaren Werkzeugmaschine 12a. Die Antriebseinheit 50a ist als Elektromotoreinheit ausgebildet. Die Abtriebseinheit 42a ist als Getriebeeinheit ausgebildet, die dazu vorgesehen ist, ein Antriebsmoment und/oder eine Antriebsdrehzahl der Antriebseinheit 50a zu über- und/oder zu untersetzen. Es ist jedoch auch denkbar, dass die tragbare Werkzeugmaschine 12a entkoppelt von der Abtriebseinheit 42a ausgebildet ist oder dass die Abtriebseinheit 42a ein Antriebsmoment und/oder eine Antriebsdrehzahl der Antriebseinheit 50a ohne Über- und/oder Untersetzung überträgt. Die Abtriebseinheit 42a umfasst zumindest eine Abtriebsspindel 52a und ein auf der Abtriebsspindel 52a drehfest angeordnetes Abtriebselement 44a. Das Abtriebselement 44a ist als Formschlusskupplungselement ausgebildet, das einstückig mit einem Zahnrad der Abtriebseinheit 42a ausgebildet ist (Figur 6). Hierbei umfasst das Abtriebselement 44a Fortsätze, die sich zumindest im Wesentlichen parallel zu einer Rotationsachse der Abtriebsspindel 52a erstrecken.

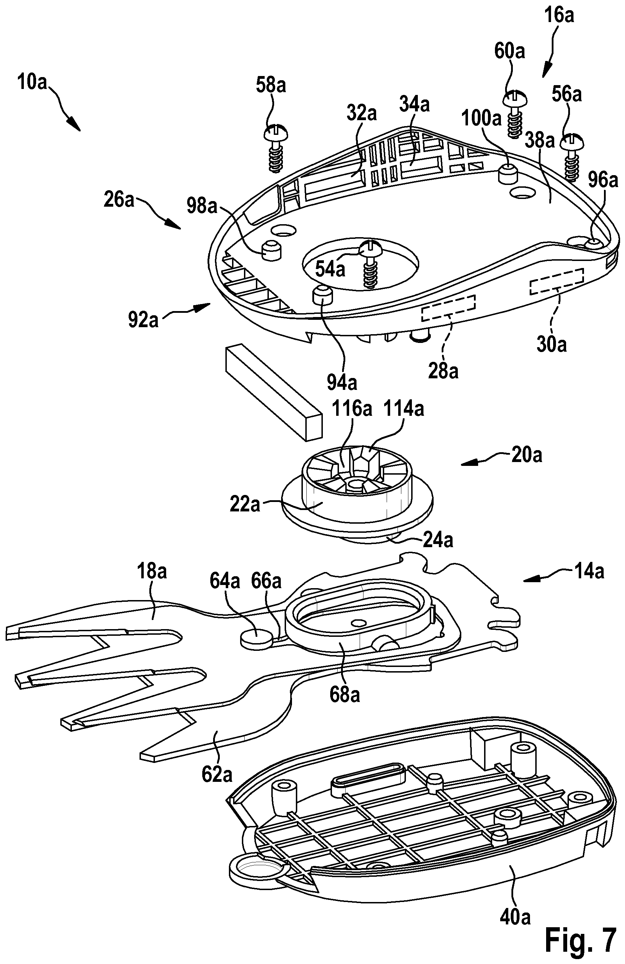

Die Garteneinsatzwerkzeugvorrichtung 10a für die tragbare Werkzeugmaschine 12a umfasst zumindest eine Einsatzwerkzeugeinheit 14a und zumindest ein Gehäuse 16a, in dem zumindest ein beweglich gelagertes Schneidelement 18a der Einsatzwerkzeugeinheit 14a antriebseinheitsfrei angeordnet ist. Das Gehäuse 16a umfasst zumindest zwei miteinander verbundene Gehäuseschalenelemente 38a, 40a. Die Gehäuseschalenelemente 38a, 40a sind in einem montierten Zustand mittels Befestigungselementen 54a, 56a, 58a, 60a miteinander lösbar verbunden. Die Befestigungselemente 54a, 56a, 58a, 60a sind hierbei als Befestigungsschrauben ausgebildet. Die Einsatzwerkzeugeinheit 14a ist, betrachtet entlang einer zumindest im Wesentlichen senkrecht zu einer Bewegungsebene des Schneidelements 18a verlaufenden Richtung, zumindest teilweise zwischen den Gehäuseschalenelementen 38a, 40a angeordnet. Hierbei ist zumindest ein Gegenschneidelement 62a der Einsatzwerkzeugeinheit 14a an einem der Gehäuseschalenelemente 38a, 40a fixiert. Somit ist das Gegenschneidelement 62a der Einsatzwerkzeugeinheit 14a ortsfest relativ zu einem der Gehäuseschalenelemente 38a, 40a angeordnet. Das Schneidelement 18a ist beweglich auf dem Gegenschneidelement 62a gelagert (Figur 7). Hierbei greift zumindest ein am Gegenschneidelement 62a angeordneter Führungsbolzen 64a der Einsatzwerkzeugeinheit 14a durch eine Führungsausnehmung 66a des Schneidelements 18a durch das Schneidelement 18a hindurch. Hierdurch wird eine Schwenkbewegung des Schneidelements 18a relativ zum Gegenschneidelement 62a ermöglicht. Somit ist die Einsatzwerkzeugeinheit 14a als Grasschneidewerkzeugeinheit ausgebildet.

Des Weiteren weist die Garteneinsatzwerkzeugvorrichtung 10a zumindest eine Antriebsverbindungseinheit 20a auf, die zumindest ein Antriebsverbindungselement 22a umfasst, das drehbar im Gehäuse 16a gelagert ist. Hierbei ist das Antriebsverbindungselement 22a als Formschlusskupplungselement ausgebildet. Das Antriebsverbindungselement 22a umfasst satteldachartige Verbindungszähne 114a (Figur 5), die in einem an der tragbaren Werkzeugmaschine 12a angeordneten Zustand des Gehäuses 16a in mit den Verbindungszähnen des Antriebsverbindungselements 22a korrespondierend ausgebildete Ausnehmungen 110a (Figur 6) des Abtriebselements 44a eingreifen. Zudem weist das Abtriebselement 44a ebenfalls satteldachartige Verbindungszähne 112a auf (Figur 6), die in zumindest einem Zustand in korrespondierende Ausnehmungen 116a (Figur 5) des Antriebsverbindungselements 22a eingreifen. Das Abtriebselement 44a ist in einem an einer Werkzeugaufnahme 36a der tragbaren Werkzeugmaschine 12a angeordneten Zustand des Gehäuses 16a formschlüssig entlang einer Rotationsrichtung des Abtriebselements 44a mit dem Antriebsverbindungselement 22a verbunden. Somit sind das Abtriebselement 44a und das Antriebsverbindungselement 22a in einem an der Werkzeugaufnahme 36a angeordneten Zustand drehfest miteinander verbunden.

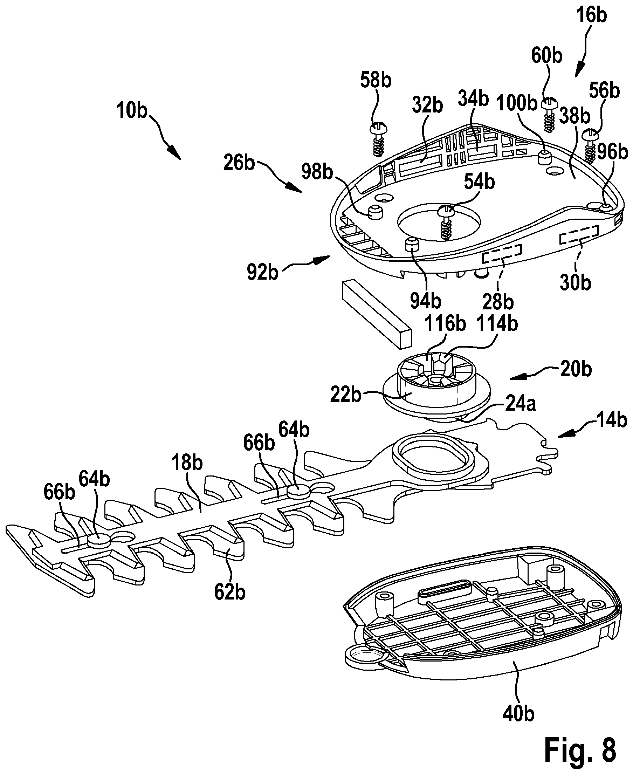

Das Antriebsverbindungselement 22a ist zumindest mit dem Schneidelement 18a der Einsatzwerkzeugeinheit 14a verbunden. Hierzu umfasst die Einsatzwerkzeugeinheit 14a zumindest ein Kulissenelement 68a, das an dem Schneidelement 18a befestigt ist. Das Kulissenelement 68a weist eine ovale oder elliptische Ausgestaltung auf. Hierbei umschließen Randbereiche des Kulissenelements 68a eine ovale oder eine elliptische Verbindungsausnehmung des Kulissenelements 68a. Am Antriebsverbindungselement 22a ist ein Exzenterelement 24a der Antriebsverbindungseinheit 20a angeordnet (Figuren 5 und 8). Das Exzenterelement 24a ist einstückig mit dem Antriebsverbindungselement 22a ausgebildet. Hierbei greift das Exzenterelement 24a in einem montierten Zustand in die Verbindungsausnehmung des Kulissenelements 68a ein. Hierdurch sind Antriebsmomente und/oder Antriebskräfte von dem Antriebsverbindungselement 22a auf das Schneidelement 18a übertragbar. Das Antriebsverbindungselement 22a treibt hierbei zumindest das Schneidelement 18a der Einsatzwerkzeugeinheit 14a in zumindest einem Zustand oszillierend an. Hierbei treibt das Antriebsverbindungselement 22a das Schneidelement 18a in einem an der tragbaren Werkzeugmaschine 12a angeordneten Zustand des Gehäuses 16a und infolge einer Übertragung von Antriebsmomenten und/oder Antriebskräften der Antriebseinheit 50a der tragbaren Werkzeugmaschine 12a in einem eingeschalteten Zustand der Antriebseinheit 50a auf eine, einem Fachmann bereits bekannte Art und Weise oszillierend an. Somit umfasst die tragbare Werkzeugmaschine 12a zumindest die Abtriebseinheit 42a, die zumindest das Abtriebselement 44a aufweist, das in zumindest einem Zustand mit dem Antriebsverbindungselement 22a der Antriebsverbindungseinheit 20a der Garteneinsatzwerkzeugvorrichtung 10a zusammenwirkt.

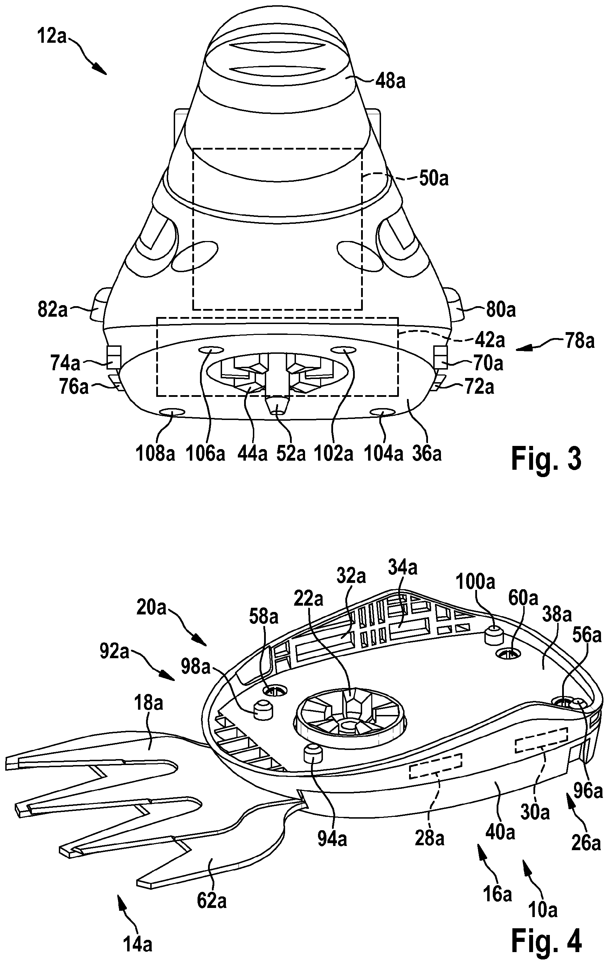

Ferner umfasst die Garteneinsatzwerkzeugvorrichtung 10a zumindest eine Kopplungseinheit 26a, die zumindest ein am Gehäuse 16a angeordnetes Kopplungselement 28a, 30a, 32a, 34a zu einer Fixierung des Gehäuses 16a an der Werkzeugaufnahme 36a der tragbaren Werkzeugmaschine 12a aufweist. Insgesamt weist die Kopplungseinheit 26a vier am Gehäuse 16a angeordnete Kopplungselemente 28a, 30a, 32a, 34a auf. Es ist jedoch auch denkbar, dass die Kopplungseinheit 26a eine von vier abweichende Anzahl an Kopplungselementen 28a, 30a, 32a, 34a aufweist. Die Kopplungselemente 28a, 30a, 32a, 34a sind als Rastausnehmungen ausgebildet, die zu einer Befestigung des Gehäuses 16a an der Werkzeugaufnahme 36a mit Fixierelementen 70a, 72a, 74a, 76a einer Fixiereinheit 78a der tragbaren Werkzeugmaschine 12a zusammenwirken (Figuren 1 bis 3). Insgesamt weist die Fixiereinheit 78a somit vier Fixierelemente 70a, 72a, 74a, 76a auf, wobei jedes der Fixierelemente 70a, 72a, 74a, 76a jeweils einem der Kopplungselemente 28a, 30a, 32a, 34a zugeordnet ist. Die Fixierelemente 70a, 72a, 74a, 76a sind als federelastische Rasthaken ausgebildet, die in einem an der Werkzeugaufnahme 36a angeordneten Zustand des Gehäuses 16a in die als Rastausnehmungen ausgebildeten Kopplungselemente 28a, 30a, 32a, 34a eingreifen. Zu einem Lösen einer Verbindung der Kopplungselemente 28a, 30a, 32a, 34a und der Fixierelemente 70a, 72a, 74a, 76a umfasst die Fixiereinheit 78a zwei Bedienelemente 80a, 82a (Figur 3). Hierbei ist jeweils ein Bedienelement 80a, 82a zu einer Betätigung von zwei der vier Fixierelemente 70a, 72a, 74a, 76a vorgesehen. Es ist jedoch auch denkbar, dass alle vier Fixierelemente 70a, 72a, 74a, 76a durch lediglich ein Bedienelement der Fixiereinheit 78a betätigt werden. Hiermit sind die Fixierelemente 70a, 72a, 74a, 76a mittels der Bedienelemente 80a, 82a auf eine, einem Fachmann bereits bekannte Art und Weise entgegen einer Federkraft aus den als Rastausnehmungen ausgebildeten Kopplungselementen 28a, 30a, 32a, 34a heraus bewegbar. Jeweils zwei der vier Fixierelemente 70a, 72a, 74a, 76a und eines der zwei Bedienelemente 80a, 82a sind über angeformte Verbindungsstege 84a, 86a der Fixiereinheit 78a miteinander verbunden (Figur 3). Die Verbindungsstege 84a, 86a der Fixiereinheit 78a stützen sich jeweils an einem Federelement 88a, 90a der Fixiereinheit 78a ab. Es ist jedoch auch denkbar, dass sich die Verbindungsstege 84a, 86a gemeinsam an einem einzigen Federelement der Fixiereinheit 78a abstützen. Durch eine Betätigung der Bedienelemente 80a, 82a werden die Verbindungsstege 84a, 86a zusammen mit den Fixierelementen 70a, 72a, 74a, 76a entgegen Federkräften der Federelemente 88a, 90a bewegt, um eine Lösung einer Verbindung zwischen den Fixierelementen 70a, 72a, 74a, 76a und den Kopplungselementen 28a, 30a, 32a, 34a zu ermöglichen.

Des Weiteren weist die Garteneinsatzwerkzeugvorrichtung 10a eine Kodierungseinheit 92a auf (Figur 4), die dazu vorgesehen ist, eine fehlerhafte Montage des Gehäuses 16a an der Werkzeugaufnahme 36a zu verhindern. Die Kodierungseinheit 92a ist als mechanische Kodierungseinheit ausgebildet. Es ist jedoch auch denkbar, dass die Kodierungseinheit 92a als elektronische Kodierungseinheit ausgebildet ist. Die Kodierungseinheit 92a umfasst zumindest ein Kodierungselement 94a, 96a, 98a, 100a, das dazu vorgesehen ist, in einem an der tragbaren Werkzeugmaschine 12a angeordneten Zustand mit zumindest einem Entkodierungselement 102a, 104a, 106a, 108a der tragbaren Werkzeugmaschine 12a zusammenzuwirken. Insgesamt weist die Kodierungseinheit 92a vier Kodierungselemente 94a, 96a, 98a, 100a auf, die dazu vorgesehen sind, in einem an der tragbaren Werkzeugmaschine 12a angeordneten Zustand mit zumindest einem Entkodierungselement 102a, 104a, 106a, 108a der tragbaren Werkzeugmaschine 12a zusammenzuwirken. Somit umfasst die tragbare Werkzeugmaschine 12a insgesamt vier Entkodierungselemente 102a, 104a, 106a, 108a. Es ist jedoch auch denkbar, dass die Kodierungseinheit 92a und/oder die tragbare Werkzeugmaschine 12a eine von vier abweichende Anzahl an Kodierungselementen 94a, 96a, 98a, 100a bzw. Entkodierungselementen 102a, 104a, 106a, 108a umfasst. Die Kodierungselemente 94a, 96a, 98a, 100a sind als Kodierungsstifte ausgebildet, die einstückig an eines der Gehäuseschalenelemente 38a, 40a angeformt sind. Die Entkodierungselemente 102a, 104a, 106a, 108a sind als Entkodierungsausnehmungen ausgebildet, die korrespondierend mit den Kodierungselementen 94a, 96a, 98a, 100a ausgebildet sind. Mittels eines Zusammenwirkens der Kodierungselemente 94a, 96a, 98a, 100a und der Entkodierungselemente 102a, 104a, 106a, 108a können zudem in einem an der tragbaren Werkzeugmaschine 12a angeordneten Zustand des Gehäuses 16a auf die Garteneinsatzwerkzeugvorrichtung 10a wirkende Drehmomente an der tragbaren Werkzeugmaschine 12a abgestützt werden.

In Figur 8 ist ein alternatives Ausführungsbeispiel dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und b hinzugefügt. Die nachfolgende Beschreibung beschränkt sich im Wesentlichen auf die Unterschiede zu dem in den Figuren 1 bis 7 beschriebenen ersten Ausführungsbeispiel, wobei bezüglich gleichbleibender Bauteile, Merkmale und Funktionen auf die Beschreibung des ersten Ausführungsbeispiels in den Figuren 1 bis 7 verwiesen werden kann.

Figur 8 zeigt eine Explosionsdarstellung einer alternativen Garteneinsatzwerkzeugvorrichtung 10b für die tragbare Werkzeugmaschine 12a. Die Garteneinsatzwerkzeugvorrichtung 10b kann alternativ zu der in den Figuren 1 bis 7 gezeigten Garteneinsatzwerkzeugvorrichtung 10a an der tragbaren Werkzeugmaschine 12a angeordnet werden. Die Garteneinsatzwerkzeugvorrichtung 10b umfasst zumindest eine Einsatzwerkzeugeinheit 14b und zumindest ein Gehäuse 16b, in dem zumindest ein beweglich gelagertes Schneidelement 18b der Einsatzwerkzeugeinheit 14b antriebseinheitsfrei angeordnet ist. Das Schneidelement 18b ist hierbei translatorisch beweglich an einem Gegenschneidelement 62b der Einsatzwerkzeugeinheit 14b gelagert. Somit ist die Einsatzwerkzeugeinheit 14b als Heckenscherenwerkzeugeinheit ausgebildet. Hinsichtlich weiterer Merkmale und Funktionen der Garteneinsatzwerkzeugvorrichtung 10b darf auf die Beschreibung der Figuren 1 bis 7 verwiesen werden.

## Patentansprüche

1. Garteneinsatzwerkzeugvorrichtung für eine tragbare Werkzeugmaschine (12a), mit zumindest einer Einsatzwerkzeugeinheit (14a; 14b) mit zumindest einem Gehäuse (16a; 16b), in dem zumindest ein beweglich gelagertes Schneidelement (18a; 18b) der Einsatzwerkzeugeinheit (14a; 14b) antriebseinheitsfrei angeordnet ist, **dadurch gekennzeichnet, dass** das Gehäuse (16a; 16b) zumindest zwei miteinander verbundene Gehäuseschalenelemente (38a, 40a; 38b, 40b) umfasst.

2. Garteneinsatzwerkzeugvorrichtung nach Anspruch 1, **gekennzeichnet durch** zumindest eine Antriebsverbindungseinheit (20a; 20b), die zumindest ein Antriebsverbindungselement (22a; 22b) umfasst, das drehbar im Gehäuse (16a; 16b) gelagert ist.

3. Garteneinsatzwerkzeugvorrichtung nach einem der vorhergehenden Ansprüche, **gekennzeichnet durch** zumindest eine Antriebsverbindungseinheit (20a; 20b), die zumindest ein Antriebsverbindungselement (22a; 22b) umfasst, das zumindest mit dem Schneidelement (18a; 18b) der Einsatzwerkzeugeinheit (14a; 14b) verbunden ist.

4. Garteneinsatzwerkzeugvorrichtung nach einem der vorhergehenden Ansprüche, **gekennzeichnet durch** zumindest eine Antriebsverbindungseinheit (20a; 20b), die zumindest ein Antriebsverbindungselement (22a; 22b) umfasst, das zumindest das Schneidelement (18a; 18b) der Einsatzwerkzeugeinheit (14a; 14b) in zumindest einem Zustand oszillierend antreibt.

5. Garteneinsatzwerkzeugvorrichtung nach einem der Ansprüche 2 bis 4, **dadurch gekennzeichnet, dass** das Antriebsverbindungselement (22a; 22b) als Formschlusskupplungselement ausgebildet ist.

6. Garteneinsatzwerkzeugvorrichtung zumindest nach einem der Ansprüche 2 bis 4, **dadurch gekennzeichnet, dass** am Antriebsverbindungselement (22a; 22b) ein Exzenterelement (24a; 24b) der Antriebsverbindungseinheit (20a; 20b) angeordnet ist.

7. Garteneinsatzwerkzeugvorrichtung nach einem der vorhergehenden Ansprüche, **gekennzeichnet durch** zumindest eine Kopplungseinheit (26a; 26b), die zumindest ein am Gehäuse (16a; 16b) angeordnetes Kopplungselement (28a, 30a, 32a, 34a; 28b, 30b, 32b, 34b) zu einer Fixierung des Gehäuses (16a; 16b) an einer Werkzeugaufnahme (36a) der tragbaren Werkzeugmaschine (12a) aufweist.

8. Gartenwerkzeugmaschinensystem mit zumindest einer tragbaren Werkzeugmaschine (12a) und mit zumindest einer Garteneinsatzwerkzeugvorrichtung nach einem der vorhergehenden Ansprüche.

9. Gartenwerkzeugmaschinensystem nach Anspruch 8, **dadurch gekennzeichnet, dass** die tragbare Werkzeugmaschine (12a) zumindest eine Abtriebseinheit (42a) umfasst, die zumindest ein Abtriebselement (44a) aufweist, das in zumindest einem Zustand mit einem Antriebsverbindungselement (22a; 22b) einer Antriebsverbindungseinheit (20a; 20b) der Garteneinsatzwerkzeugvorrichtung zusammenwirkt.

## Claims

1. Gardening attachment tool device for a portable power tool (12a), having at least one attachment tool unit (14a; 14b) with at least one housing (16a; 16b) in which at least one movably mounted cutting element (18a; 18b) of the attachment tool unit (14a; 14b) is arranged without a drive unit, **characterized in that** the housing (16a; 16b) comprises at least two connected-together housing shell elements (38a, 40a; 38b, 40b).

2. Gardening attachment tool device according to Claim 1, **characterized by** at least one drive connection unit (20a; 20b) which comprises at least one drive connection element (22a; 22b) which is mounted in a rotatable manner in the housing (16a; 16b).

3. Gardening attachment tool device according to either of the preceding claims, **characterized by** at least one drive connection unit (20a; 20b) which comprises at least one drive connection element (22a; 22b) which is connected at least to the cutting element (18a; 18b) of the attachment tool unit (14a; 14b).

4. Gardening attachment tool device according to one of the preceding claims, **characterized by** at least one drive connection unit (20a; 20b) which comprises at least one drive connection element (22a; 22b) which drives at least the cutting element (18a; 18b) of the attachment tool unit (14a; 14b) in an oscillating manner in at least one state.

5. Gardening attachment tool device according to one of Claims 2 to 4, **characterized in that** the drive connection element (22a; 22b) is in the form of a form-fitting clutch element.

6. Gardening attachment tool device at least according to one of Claims 2 to 4, **characterized in that** an eccentric element (24a; 24b) of the drive connection unit (20a; 20b) is arranged on the drive connection element (22a; 22b).

7. Gardening attachment tool device according to one of the preceding claims, **characterized by** at least one coupling unit (26a; 26b) which has at least one coupling element (28a, 30a, 32a, 34a; 28b, 30b, 32b, 34b), arranged on the housing (16a; 16b), for fixing the housing (16a; 16b) to a tool receptacle (36a) of the portable power tool (12a).

8. Gardening power tool system having at least one portable power tool (12a) and having at least one gardening attachment tool device according to one of the preceding claims.

9. Gardening power tool system according to Claim 8, **characterized in that** the portable power tool (12a) comprises at least one output unit (42a) which has at least one output element (44a) which engages with a drive connection element (22a; 22b) of a drive connection unit (20a; 20b) of the gardening attachment tool device in at least one state.

## Revendications

1. Dispositif d'outil d'insertion pour jardinage pour une machine-outil portative (12a), comprenant au moins une unité d'outil d'insertion (14a ; 14b) avec au moins un boîtier (16a ; 16b) dans lequel est disposé sans unité d'entraînement au moins un élément de coupe supporté de manière déplaçable (18a ; 18b) de l'unité de l'outil d'insertion (14a ; 14b), **caractérisé en ce que** le boîtier (16a ; 16b) comprend au moins deux éléments de coque de boîtier (38a, 40a ; 38b, 40b) connectés l'un à l'autre.

2. Dispositif d'outil d'insertion pour jardinage selon la revendication 1, **caractérisé par** au moins une unité de connexion d'entraînement (20a; 20b), qui comprend au moins un élément de connexion d'entraînement (22a ; 22b) qui est supporté de manière rotative dans le boîtier (16a ; 16b).

3. Dispositif d'outil d'insertion pour jardinage selon l'une quelconque des revendications précédentes, **caractérisé par** au moins une unité de connexion d'entraînement (20a ; 20b) qui comprend au moins un élément de connexion d'entraînement (22a ; 22b) qui est connecté au moins à l'élément de coupe (18a ; 18b) de l'unité d'outil d'insertion (14a ; 14b).

4. Dispositif d'outil d'insertion pour jardinage selon l'une quelconque des revendications précédentes, **caractérisé par** au moins une unité de connexion d'entraînement (20a ; 20b) qui comprend au moins un élément de connexion d'entraînement (22a ; 22b) qui entraîne en oscillation au moins l'élément de coupe (18a ; 18b) de l'unité d'outil d'insertion (14a ; 14b) dans au moins un état.

5. Dispositif d'outil d'insertion pour jardinage selon l'une quelconque des revendications 2 à 4, **caractérisé en ce que** l'élément de connexion d'entraînement (22a ; 22b) est réalisé sous forme d'élément d'accouplement par engagement par correspondance de formes.

6. Dispositif d'outil d'insertion pour jardinage selon au moins l'une quelconque des revendications 2 à 4, **caractérisé en ce qu'**un élément excentrique (24a ; 24b) de l'unité de connexion d'entraînement (20a ; 20b) est disposé au niveau de l'élément de connexion d'entraînement (22a ; 22b).

7. Dispositif d'outil d'insertion pour jardinage selon l'une quelconque des revendications précédentes, **caractérisé par** au moins une unité d'accouplement (26a ; 26b) qui présente au moins un élément d'accouplement (28a, 30a, 32a, 34a ; 28b, 30b, 32b, 34b) disposé au niveau du boîtier (16a ; 16b) en vue d'une fixation du boîtier (16a ; 16b) à un logement d'outil (36a) de la machine-outil portative (12a).

8. Système de machine-outil pour jardinage comprenant au moins une machine-outil portative (12a) et au moins un dispositif d'outil d'insertion pour jardinage selon l'une quelconque des revendications précédentes.

9. Système de machine-outil pour jardinage selon la revendication 8, **caractérisé en ce que** la machine-outil portative (12a) comprend au moins une unité de prise de force (42a) qui présente au moins un élément de prise de force (44a) qui coopère dans au moins un état avec un élément de connexion d'entraînement (22a ; 22b) d'une unité de connexion d'entraînement (20a ; 20b) du dispositif d'outil d'insertion pour jardinage.
